# DEMANDE DE BREVET EUROPEEN

(11) **EP 1 199 283 A1**
(43) Date de publication de la demande: **24.04.2002**
(21) Numéro de dépôt: 01420207.1
(22) Date de dépôt: 16.10.2001
(51) Int. Cl.: C02F 3/02, C02F 3/12

(54) **Procédé et installation de stockage et traitement de rejets liquides pollués**

(30) Priorité: 16.10.2000 FR 0013320
(71) Demandeur: Labaronne-Citaf, 38200 Vienne (FR)
(72) Inventeur: Haricot, Gérard, 38200 Vienne (FR); Charton, Michel, 69480 Pommiers (FR)
(74) Mandataire: Palix, Stéphane

(57) **Abrégé**

Procédé de stockage et d'aération d'effluents pollués liquides à l'intérieur d'une citerne (1), souple, fermée, étanche et auto-portante.

Il se ***caractérise*** en ce qu'il présente la succession d'opérations de :
- prélèvement du liquide pollué par aspiration à la base de la citerne (1) au travers d'un circuit (7,9) associé à une pompe (8) située à l'extérieur de l'enceinte ;
- transfert dudit liquide dans un ensemble mélangeur/aérateur (20), du type à dépression, relié à une rampe de distribution (15), extérieure à l'enceinte et parallèle à l'une des parois latérales ;
- injection du liquide aéré à l'intérieur de l'enceinte (1) par l'intermédiaire de buses (16) reliées à la rampe de distribution (15).

## Description

### Domaine Technique

La présente invention a trait au secteur du stockage et du traitement épuratoire de rejets liquides pollués, d'origine urbaine, industrielle ou agricole.

Elle a trait plus particulièrement à un procédé perfectionné, ainsi qu'à une installation pour sa mise en oeuvre, utilisable pour éviter la fermentation de rejets liquides pollués, voire même pour réaliser un traitement épuratoire selon la technique dite « à biomasse activée ».

### Techniques antérieures

Le document EP-A-1 010 670, déposé par les Demandeurs, décrit un nouveau type de station d'épuration d'effluents pollués fluides, liquides notamment, qui comprend une zone de traitement en vue de séparer le fluide pollué des matières polluantes.

Selon les enseignements de ce document, la zone de traitement est constituée par une citerne souple, fermée, étanche et autoportante.

Lors de l'utilisation selon la technique dite « à biomasse activée », cette zone de traitement est constituée par un aérateur dont l'enceinte est une citerne souple, et qui comprend :
- un circuit d'entrée pour les boues décantées destinées à assurer la maîtrise de la croissance de la biomasse ;
- un circuit d'admission de l'effluent permettant sa répartition à l'intérieur du réservoir de façon régulière et homogène ;
- un circuit de prélèvement après traitement en vue du transfert à une zone de décantation et ;
- des moyens permettant de diffuser de l'air à l'intérieur de la citerne et ;
- des évents pour l'évacuation de l'air entrant et des gaz générés pendant l'aération de l'effluent traité.

Concernant les moyens permettant de diffuser de l'air à l'intérieur de la citerne, il est mentionné qu'ils peuvent être constitués par un système mélangeur/aérateur de type connu qui est donc disposé à l'intérieur de ladite citerne.

Plus particulièrement, selon ce document, ces moyens d'aération sont conçus pour permettre de diffuser l'air sur toute la base de la surface de la citerne, lesdits moyens étant constitués par une membrane perforée, soudée contre la paroi intérieure de ladite citerne.

Dans la pratique, si une telle manière de procéder donne satisfaction, il s'avère cependant que, dans certains cas, il peut y avoir un risque de colmatage de la membrane perforée au travers de laquelle s'effectue l'introduction de l'air, enrichi ou non en oxygène.

Par ailleurs, si la solution décrite dans le document précité est particulièrement adaptée pour être intégrée dans une ligne d'épuration d'effluents pollués comprenant non seulement un aérateur du type précité, mais également une zone de décantation et de préférence une zone de stockage des boues concentrées après décantation, elle n'est cependant pas adaptée au traitement sur le site même de production d'effluents pour lesquels la décantation et le stockage des boues concentrées après décantation, s'effectuent sur un autre site.

### Exposé de l'invention

Or, on a trouvé, et c'est ce qui fait l'objet de la présente invention, un nouveau procédé de stockage et d'aération d'effluents pollués liquides à l'intérieure d'une citerne souple, fermée, étanche et auto-portante, qui peut, pour certaines applications, être utilisé simplement pour éviter la fermentation d'un liquide pollué qui implique de réaliser seulement une aération dudit liquide et qui, par ailleurs, peut être facilement adapté pour mettre en oeuvre la technique de traitement dite "à biomasse activée".

D'une manière générale, conformément au procédé de l'invention, le traitement d'aération à l'intérieur de la citerne souple comporte les opérations de :
- prélèvement du liquide pollué par aspiration à la base de la citerne au travers d'un circuit associé à une pompe située à l'extérieur de l'enceinte ;
- transfert dudit liquide dans un ensemble mélangeur/aérateur du type à dépression, relié à une rampe de distribution, extérieure à l'enceinte et parallèle à l'une des parois latérales ;
- injection du liquide aéré à l'intérieur de l'enceinte par l'intermédiaire de buses reliées à la rampe de distribution.

Conformément au procédé selon l'invention, l'injection du mélange air + liquide à l'intérieur de l'enceinte, est réalisé en formant des jets orientés sensiblement parallèlement au fond de l'enceinte, et chacun dans une direction polaire déterminée en vue d'optimiser le brassage.

Grâce à une telle manière de procéder, l'aération ou oxygénation du liquide pollué est réalisée en deux temps. La première phase s'effectue au niveau du mélangeur/aérateur disposé à l'extérieur de l'enceinte, et elle est complétée, tout d'abord lors du transfert dans la rampe de distribution puis à l'intérieur de l'enceinte même par le fait que les bulles d'air non absorbées lors de la première phase d'aération et qui sont donc injectées à l'intérieur de l'enceinte avec le liquide aéré, ont un trajet qui est sensiblement horizontal à la sortie de la buse d'éjection, puis elliptique avant de devenir vertical, ce qui améliore la durée de contact des bulles d'air avec le liquide et améliore le transfert d'oxygène de l'air dans l'effluent à traiter.

L'invention concerne également une installation permettant la mise en oeuvre d'un tel procédé.

Cette installation, qui dans la suite de la description, sera désignée par le terme « aérateur », est donc constituée essentiellement par une citerne souple, fermée, étanche et auto-portante, à l'intérieur de laquelle est donc stocké l'effluent liquide à traiter.

D'une manière similaire aux enseignements de l'EP-1 010 670, cette citerne souple formant un réservoir fermé, dont la capacité est fonction du volume du produit que l'on souhaite traiter, est associée à :
- un circuit d'admission de l'effluent, permettant sa répartition à l'intérieur dudit réservoir de façon régulière et homogène ;
- un circuit de prélèvement après traitement aérobie en vue d'un transfert éventuel du produit à une zone de décantation ou autre pouvant être sur un site différent ;
- un circuit de prélèvement des boues décantées après arrêt de l'opération « brassage-aération » ;
- des moyens permettant de réaliser l'aération proprement dite du liquide contenu à l'intérieur de la citerne ;
- des évents pour l'évacuation de l'air entrant et des gaz générés pendant l'aération de l'effluent traité.

Conformément à l'invention, les moyens d'aération de l'effluent sont constitués par l'intermédiaire d'un ensemble disposé à l'extérieur de l'enceinte, et qui comprend :
- une pompe prélevant le liquide pollué à l'intérieur de l'enceinte au travers d'un circuit d'admission, noyé dans le sol en dessous de la citerne et débouchant dans ladite enceinte sur la base de cette dernière ;
- un mélangeur-aérateur du type à dépression, dont l'entrée est reliée à la sortie de ladite pompe et qui délivre le mélange liquide/air à l'intérieur d'une rampe continue s'étendant latéralement à la base de l'enceinte ;
- une pluralité de conduits de transfert, espacés les uns des autres, et raccordés à ladite rampe, circuits noyés dans le sol en dessous de la citerne et qui comportent, à leur extrémité débouchant à l'intérieur de ladite citerne, une buse éjectant le liquide aéré sensiblement horizontalement à l'intérieur de cette dernière.

Comme pompe, on utilisera toute pompe de type connu et, comme dispositif mélangeur/aérateur, des ensembles de type connu comprenant essentiellement un venturi constitué par une zone convergente et divergente, associé à des moyens d'injection d'air et/ou oxygène ou tout autre gaz.

### Description sommaire des dessins

L'invention et les avantages qu'elle apporte sera mieux comprise grâce à l'exemple de réalisation donné ci-après, qui est illustré par les dessins annexés dans lesquels :
- la figure 1 est une vue de dessus d'un aérateur réalisé conformément à l'invention, la partie supérieure de l'enceinte ayant été partiellement écorchée afin de visualiser l'intérieur de la citerne ;

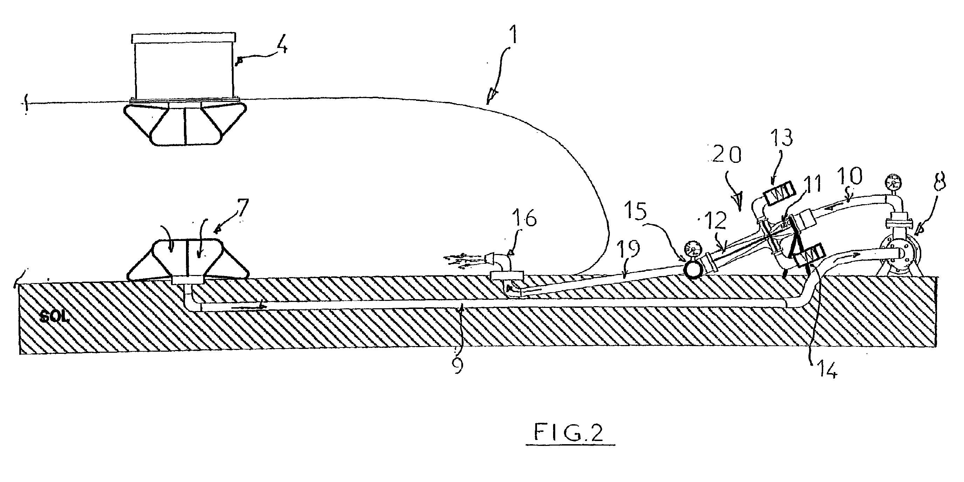

- la figure 2 est une vue en coupe partielle montrant la structure de cet aérateur et la manière dont est réalisé le prélèvement, l'aération et la réinjection du liquide pollué à l'intérieur de ladite citerne.

### Manière de réaliser l'invention

En se reportant aux figures annexées, l'aérateur réalisé conformément à l'invention, est donc constitué par une citerne fermée désignée par la référence générale (1), étanche, souple, et auto-portante.

Une telle citerne, développée depuis fort longtemps par le Demandeur, est réalisée à partir d'un tissu enduit présentant une grande résistance à l'élongation et à la déchirure. Elle peut avoir différentes formes et est généralement oblongue.

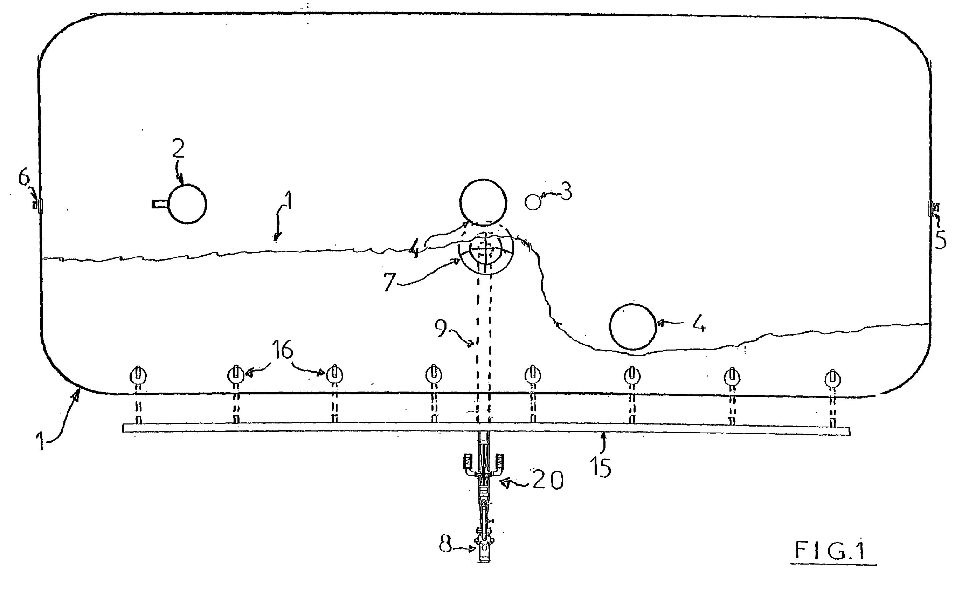

En se reportant plus particulièrement à la figure 1, en partie supérieure, la citerne est équipée d'au moins un évent (2) pour l'évacuation des gaz produits au cours de la phase de traitement.

Elle comporte également de préférence une vidange (3) de surverse et un ou plusieurs trous d'homme désignés par la même référence (4) pour effectuer éventuellement des prélèvements ou intervenir à l'intérieur de la citerne.

Elle comporte également, disposée sur les parois latérales, une zone d'admission (5) pour l'effluent à traiter, en général disposé en partie basse de l'enceinte, et une zone de vidange (6) disposée également en partie basse.

Afin de réaliser l'aération du liquide pollué et stocké à l'intérieur de la citerne, processus opératoire qui peut être mis en oeuvre même avec un faible niveau de produit dans cette dernière, celle-ci est équipée d'un ensemble permettant le prélèvement du liquide pollué, le transfert de ce produit à un ensemble mélangeur-aérateur, et la réinjection du liquide aéré à l'intérieur de la citerne.

Le prélèvement du liquide est obtenu au moyen d'une tête de captage (7) montée à l'intérieur de la citerne. La partie centrale de la tête de captage (7) est reliée à une pompe (8), située à l'extérieur de l'enceinte par l'intermédiaire d'un conduit d'admission (9) noyé dans le sol, en dessous de la citerne.

La pompe (8) délivre le liquide prélevé à l'intérieur d'un ensemble mélangeur/aérateur, désigné par la référence générale (20), et ce au travers d'une conduite (10) reliée à l'entrée de cet ensemble mélangeur/aérateur.

Un tel ensemble mélangeur/aérateur (20) est de type connu dit « à dépression», et se compose essentiellement d'une entrée (11) en forme de convergent suivie d'une sortie (12) en forme de divergent.

La dépression créée par le passage du liquide de la zone (11) à la zone (12) entraîne une aspiration d'air, ou éventuellement d'oxygène pur ou tout autre gaz, par l'intermédiaire de deux injecteurs (13,14).

L'air admis est vivement mélangé au liquide sous forme de fines bulles. Le mélange air/liquide sous pression est injecté à l'intérieur d'une rampe commune (15) positionnée parallèlement à une paroi latérale de l'enceinte. Cette rampe peut être rectiligne dans le cas d'une citerne de forme oblongue, mais elle pourrait être éventuellement courbe si la citerne souple a la forme d'une sphère.

Conformément à l'invention, l'injection du mélange air/eau à l'intérieur de la citerne est réalisée par l'intermédiaire d'une pluralité de conduits de transfert (19), espacés les uns des autres, et raccordés à la rampe (15). Ces conduits de transfert débouchent à l'intérieur de la citerne, de préférence à proximité d'une paroi latérale et sont équipés à leur extrémité d'éjecteurs, désignés par la même référence (16) et qui, dans l'exemple illustré, sont au nombre de huit. Bien entendu, le nombre d'injecteurs sera fonction des dimensions de la citerne.

Ces éjecteurs (16) qui débouchent donc à l'intérieur de la citerne au travers de sa base, sont de préférence coudés et sont équipés à leur extrémité d'une buse, généralement conique, concentrant le mélange air/liquide sous pression et induisant des effets de brassage de la masse de l'effluent en traitement.

Par ailleurs, en procédant à une injection de cette manière, le trajet des bulles d'air qui n'ont pas été absorbées par le liquide, sont délivrées à l'intérieur de l'enceinte sensiblement horizontalement, ce qui augmente leur trajet, donc le temps de contact des bulles d'air avec le liquide.

Par rapport aux aérateurs antérieurs, notamment ceux décrits dans le brevet précité, une telle solution présente de nombreux avantages parmi lesquels on peut citer :
- le fait que l'on se libère totalement des problèmes que peut poser la déformation de l'enceinte souple ;
- et également le fait que l'on peut engager le processus d'aération pratiquement dès le commencement du remplissage de l'enceinte, un niveau de liquide de l'ordre de 10 cm dans cette dernière étant suffisant pour commencer le processus d'opération.

Il convient par ailleurs de noter que si la citerne souple est constituée d'un tissu enduit, il pourrait y être associé une couverture d'isolation thermique ou des cordons chauffants pour éviter le gel.

Enfin, une telle installation peut facilement être adaptée pour réaliser un aérateur mettant en oeuvre la technique dite « à biomasse activée ».

Dans un tel cas, il suffit de prévoir un circuit d'entrée pour les boues décantées destinées à assurer la maîtrise et la croissance de ladite biomasse.

Bien entendu, l'invention n'est pas limitée à l'exemple concret de réalisation donné, mais elle en couvre toutes les variantes réalisées dans le même esprit

## Revendications

1. Procédé de stockage et d'aération d'effluents pollués liquides à l'intérieur d'une citerne (1), souple, fermée, étanche et auto-portante, ***caractérisé* en ce qu'**il présente la succession d'opérations de :
• prélèvement du liquide pollué par aspiration à la base de la citerne (1) au travers d'un circuit (7,9) associé à une pompe (8) située à l'extérieur de l'enceinte ;
• transfert dudit liquide dans un ensemble mélangeur/aérateur (20), du type à dépression, relié à une rampe de distribution (15), extérieure à l'enceinte et parallèle à l'une des parois latérales ;
• injection du liquide aéré à l'intérieur de l'enceinte (1) par l'intermédiaire de buses (16) reliées à la rampe de distribution (15).

2. Procédé selon la revendication 1, **caractérisé en ce que** l'injection du mélange air + liquide à l'intérieur de l'enceinte (1), est réalisé en formant des jets orientés sensiblement parallèlement au fond de l'enceinte.

3. Installation pour la mise en oeuvre du procédé selon des revendications 1 et 2, comportant une citerne souple formant un réservoir fermé dont la capacité est fonction du volume de produit à traiter, associée à :
- un circuit d'admission (5) de l'effluent, permettant sa répartition à l'intérieur dudit réservoir de façon régulière et homogène ;
- un circuit de prélèvement (6) après traitement, en vue d'un transfert éventuel du produit à une zone de décantation ou autre pouvant être sur un site différent ;
- un circuit de prélèvement des boues décantées après arrêt de l'opération « brassage-aération » ;
- des moyens permettant de réaliser l'aération proprement dite du liquide contenu à l'intérieur de la citerne (1) ;
- des évents (2) pour l'évacuation de l'air entrant et des gaz générés pendant l'aération de l'effluent traité,
**caractérisée en ce que** les moyens d'aération de l'effluent sont constitués par l'intermédiaire d'un ensemble disposé à l'extérieur de l'enceinte, et qui comprend :
- une pompe (8) prélevant le liquide pollué à l'intérieur de l'enceinte au travers d'un circuit d'admission (9), noyé dans le sol en dessous de la citerne (1) et débouchant dans ladite enceinte sur la base de cette dernière ;
- un mélangeur-aérateur (20) du type à dépression, dont l'entrée est reliée à la sortie de ladite pompe (8) et qui délivre le mélange liquide/air à l'intérieur d'une rampe (15) continue s'étendant latéralement à la base de l'enceinte ;
- une pluralité de conduits de transfert (19), espacés les uns des autres, et raccordés à la rampe (15), circuits noyés dans le sol en dessous de la citerne et qui comportent, à leur extrémité débouchant à l'intérieur de ladite citerne, une buse (16) éjectant le liquide aéré sensiblement horizontalement à l'intérieur de cette dernière.
